# EUROPÄISCHE PATENTSCHRIFT

(11) **EP 0 315 919 B1**
(45) Veröffentlichungstag und Bekanntmachung des Hinweises auf die Patenterteilung: **03.02.1993**
(21) Anmeldenummer: 88118458.4
(22) Anmeldetag: 04.11.1988
(51) Int. Cl.: H04L 12/54

(54) **Vermittlungsknoten für die Vermittlung von in Datenpaketen ubertragenen Datensignalen**
Switching node for switching data signals carried in data packets
Noeud de commutation pour la commutation de signaux de données contenus dans des paquets de données

(30) Priorität: 10.11.1987 DE 3738177
(43) Veröffentlichungstag der Anmeldung: 17.05.1989
(73) Patentinhaber: SIEMENS AKTIENGESELLSCHAFT, 80333 München (DE)
(72) Erfinder: Kammerl, Anton, Dr.-Ing., D-8038 Gröbenzell (DE); Knorpp, Eberhard, Dipl.-Ing., D-8035 Gauting (DE); Rau, Peter, Dr. rer. nat, Dipl.-Phys., D-8000 München 60 (DE)

(56) Entgegenhaltungen:
- WO-A-86/02510
- THE TRANSACTIONS OF THE IECE OF JAPAN, Band E-68, Nr. 2, Sektion E, Februar 1985, Seiten 59-64, Tokyo, JP; M. AKIYAMA et al.: "Mesh type distributed packet switching systems"
- PATENT ABSTRACTS OF JAPAN, Band 5, Nr. 181 (E-83)[853], 20. November 1981, Seite 157 E 83; & JP-A-56 110 370
- NATIONAL TELECOMMUNICATIONS CONFERENCE, Band 2, 29. November - 3. Dezember, Seiten C4.2.1-C4.2.5., IEEE, New York, US; R. WRIGHT et al.: "Fault tolerant techniques for a multiple microprocessor-based space borne packet switch"

## Beschreibung

Die Erfindung betrifft einen Vermittlungsknoten für die Vermittlung von in Datenpaketen übertragenen Datensignalen mit wenigstens einem Koppelelement, welches eine Anzahl n von Eingangsleitungen und eine Anzahl n von mit den Eingangsleitungen über einen Raumkoppler wahlfrei verbindbaren Ausgangsleitungen aufweist, wobei den Eingangsleitungen jeweils ein Pufferspeicher zugeordnet ist, in welchem k auf der jeweiligen Eingangsleitung aufeinanderfolgend auftretende Datenpakete vor ihrer Weiterleitung an die jeweils durch die in dem jeweiligen Datenpaket enthaltene Adressensignale bezeichnete Ausgangsleitung speicherbar sind.

Bei bekannten Vermittlungsknoten, wie sie beispielsweise aus der US-PS 4 491 945 bekannt sind, weisen die den Eingangsleitungen zugeordneten Pufferspeicher jeweils lediglich einen Ausgang auf. Damit kann zu einem vorgegebenen Zeitpunkt lediglich ein Datenpaket von einem Pufferspeicher aus zu dem Raumkoppler hin übertragen werden. Dies führt dazu, daß für die einzelnen, in einen Pufferspeicher aufgenommenen Datenpakete in Abhängigkeit von der Anzahl zuvor aufgenommener Datenpakete unterschiedliche Wartezeiten für eine Vermittlung auftreten. Diese Wartezeiten variieren insbesondere dann stark, wenn für eine Vermittlung über den Vermittlungsknoten Datenpakete mit variabler Länge zugelassen sind.

Es ist nun Aufgabe der vorliegenden Erfindung, einen Weg zu zeigen, wie ein Vermittlungsknoten der eingangs genannten Art ausgebildet werden kann, um die zuvor genannten Wartezeiten sowie Wartezeitschwankungen für in den Pufferspeichern gespeicherte Datenpakete verringern zu können.
Gelöst wird die vorstehend aufgezeigte Aufgabe bei einem Vermittlungsknoten der eingangs genannten Art gemäß der vorliegenden Erfindung dadurch, daß die Pufferspeicher jeweils eine Mehrzahl m ≦ k Ausgänge aufweisen, über welche gleichzeitig m in dem jeweiligen Pufferspeicher gespeicherte und an m unterschiedliche Ausgangsleitungen weiterzuleitende Datenpakete einem mxn Eingänge und n Ausgänge aufweisenden Raumkoppler zuführbar sind.

Die Erfindung bringt den Vorteil mit sich, daß dem Raumkoppler von den einzelnen Pufferspeichern her jeweils gleichzeitig eine Mehrzahl von Datenpaketen zuführbar sind, so daß sich die im wesentlichen durch die Wartezeit der Datenpakete in den einzelnen Pufferspeichern bedingte Laufzeit der Datenpakete bzw. die Schwankungen der Laufzeit durch den Vermittlungsknoten reduziert.

Vorteilhafte Ausgestaltungen der Erfindung ergeben sich aus den abhängigen Ansprüchen.

Im folgenden wird nun die vorliegende Erfindung anhand von Zeichnungen beispielsweise näher erläutert.
FIG 1 zeigt ein Blockschaltbild eines Koppelelementes, bei dem die Erfindung angewandt ist.
FIG 2 zeigt einen möglichen Aufbau eines in FIG 1 lediglich schematisch dargestellten Pufferspeichers und einer damit verbundenen Pufferspeicher-Steuereinrichtung,
FIG 3 zeigt ein Zeitdiagramm, auf welches im Zuge der Beschreibung eingegangen wird und
FIG 4 zeigt einen möglichen Aufbau einer in FIG 1 lediglich schematisch dargestellten zentralen Steuereinrichtung.

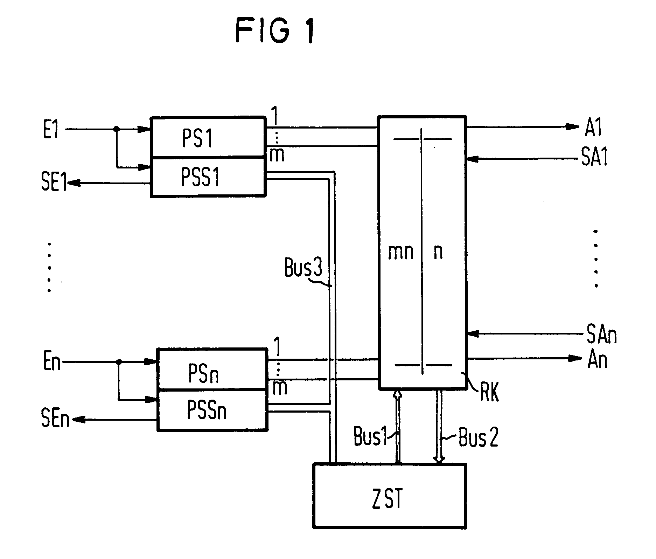

In der FIG 1 ist ein Koppelelement eines Vermittlungsknotens in Form eines Blockschaltbildes dargestellt. Dabei sind lediglich die für das Verständnis der vorliegenden Erfindung erforderlichen Schaltungsteile angegeben.

Das Koppelement weist n Eingangsleitungen E1 bis En auf, von denen lediglich die Eingangsleitungen E1 und En dargestellt sind. Die Eingangsleitungen können dabei mit Datenpakete abgebenden Endeinrichtungen oder mit Ausgangsleitungen eines oder mehrerer vorgeschalteter Koppelelemente des Vermittlungsknotens verbunden sein. Jeder der Eingangsleitungen ist jeweils ein Pufferspeicher zugeordnet, in welchem k aufeinanderfolgende Datenpakete speicherbar sind. Der der Eingangsleitung E1 bzw. En zugeordnete Pufferspeicher ist dabei mit PS1 bzw. PSn bezeichnet. Jeder der Pufferspeicher ist von einer gesonderten, mit der zugehörigen Eingangsleitung verbundenen Pufferspeicher-Steuereinrichtung her steuerbar. Die dem Pufferspeicher PS1 bzw. PSn zugeordnete Pufferspeicher-Steuereinrichtung trägt dabei die Bezeichnung PSS1 bzw. PSSn. Jede der Pufferspeicher-Steuereinrichtungen weist eine Steuerleitung auf, die für die Pufferspeicher-Steuereinrichtung PSS1 bzw. PSSn mit SE1 bzw. SEn bezeichnet ist.

Die genannten Pufferspeicher PS1 bis PSn weisen jeweils m ≦ k Ausgänge 1, ..., m auf, die einem Raumkoppler RK zugeführt sind. Dieser Raumkoppler ist entsprechend der Anzahl n der Pufferspeicher mit mxn Eingängen und n Ausgängen versehen. Die n Ausgänge sind dabei mit Ausgangsleitungen A1 bis An verbunden, die an Datenpakete aufnehmende Endeinrichtungen oder an Eingangsleitungen eines oder mehrerer nachgeschalteter Koppelelemente des Vermittlungsknotens angeschlossen sein können. Jeder dieser Ausgangsleitungen ist eine Steuerleitung zugeordnet, die entsprechend dieser Zuordnung mit SA1 bis SAn bezeichnet sind.

Für die Einstellung des Raumkopplers RK ist mit diesem über zwei Busleitungssysteme BUS1 und BUS2 eine zentrale Steuereinrichtung ZST, beispielsweise in Form einer Mikroprozessoranordnung, verbunden. Diese zentrale Steuereinrichtung steht außerdem über ein Busleitungssystem BUS3 mit den genannten Pufferspeicher-Steuereinrichtungen PSS1 bis PSSn in Verbindung.

Nachdem zuvor der Aufbau des in FIG 1 dargestellten Koppelelementes erläutert worden ist, wird nunmehr auf dessen Wirkungsweise eingegangen. Dazu wird davon ausgegangen, daß den dem Koppelelement über die einzelnen Eingangsleitungen E1 bis En zugeführten, virtuellen Verbindungen zugehörigen Datenpaketen Adressensignale beigefügt sind, welche die für die jeweilige virtuelle Verbindung ausgewählte Ausgangsleitung des Koppelelementes bezeichnen. Diese Datenpakete mögen dabei gegebenenfalls beispielsweise von dem Koppelelement vorgeschalteten Einrichtungen entsprechend aufbereitet sein. Die einzelnen Datenpakete mögen im übrigen bezüglich ihrer Länge bis zu einer vorgegebenen maximalen Länge variabel sein.

Die beispielsweise über die Eingangsleitung E1 nacheinander dem Koppelelement zugeführten Datenpakete werden vor ihrer Weiterleitung über das Koppelelement in dem Pufferspeicher PS1 zwischengespeichert. Diese Zwischenspeicherung erfolgt unter der Steuerung der Pufferspeicher-Steuereinrichtung PSS1, welche auf das Eintreffen eines Datenpaketes hin einen freien Speicherbereich des Pufferspeichers PS1 für die Zwischenspeicherung des jeweiligen Datenpaketes ansteuert. Mit dem Zwischenspeichern eines Datenpaketes überträgt die Pufferspeicher-Steuereinrichtung PSS1 die diesem Datenpaket beigefügten Adressensignale zusammen mit der Adresse desjenigen Speicherbereiches, unter welcher das gerade aufgenommene Datenpaket gespeichert ist, über das Busleitungssystem BUS3 zu der zentralen Steuereinrichtung ZST hin.

Die gleichen Vorgänge laufen auch in den übrigen, zu dem Koppelelement gehörenden Pufferspeichern (PS2 bis PSn) und Pufferspeicher-Steuereinrichtungen (PSS2 bis PSSn) bei der Zwischenspeicherung von auf den Eingangsleitungen E2 bis En eintreffenden Datenpaketen ab.

Die zentrale Steuereinrichtung ZST verwaltet anhand der ihr von den einzelnen Pufferspeicher-Steuereinrichtungen PSS1 bis PSSn übergebenen Informationen die für eine Weiterleitung über den Raumkoppler RK in den Pufferspeichern PS1 bis PSn anstehenden Datenpakete. Die Weiterleitung der Datenpakete über den Raumkoppler RK erfolgt dabei getaktet, indem zunächst in durch Pakettakte festgelegten aufeinanderfolgenden Zeitintervallen, welche beispielsweise jeweils der maximalen Länge eines Datenpaketes entsprechen mögen, jeweils von der zentralen Steuereinrichtung ZST anhand der dieser vorliegenden Informationen n Datenpakete für eine Weiterleitung an die n Ausgänge des Raumkopplers RK ausgewählt und der Raumkoppler über das Busleitungssystem BUS1 entsprechend eingestellt wird. Dazu werden von den insgesamt vorhandenen mxn Eingängen des Raumkopplers n Eingänge über Koppelpunkte mit den Ausgangsleitungen A1 bis An verbunden.

Auf die Einstellung des Raumkopplers RK hin überträgt dann die zentrale Steuereinrichtung ZST in jedem durch einen Pakettakt festgelegten Zeitintervall nacheinander die Speicheradressen, unter welchen die gerade ausgewählten Datenpakete in den Pufferspeichern gespeichert sind, über das Busleitungssystem BUS3 zu den jeweils in Frage kommenden Pufferspeicher-Steuereinrichtungen hin. Dabei kann eine Pufferspeicher-Steuereinrichtung entsprechend der Anzahl der Ausgänge des zugehörigen Pufferspeichers m Speicheradressen zugeführt erhalten. Nach Maßgabe der Speicheradresse bzw. Speicheradressen, die eine Pufferspeicher-Steuereinrichtung gerade zugeführt erhält, steuert die jeweilige Pufferspeicher-Steuereinrichtung zen zugehörigen Pufferspeicher zn und veranlaßt diesen durch eine entsprechende Anzahl von Lesebefehlen zur Abgabe eines oder mehrerer Datenpakete. Der dafür jeweils zu benutzende Ausgang ist durch den Speicheradressen jeweils beigefügte Angaben festgelegt. Die Steuerung der Weiterleitung von Datenpaketen durch die zentrale Steuereinrichtung ZST erfolgt im übrigen in der Weise, daß die Reihenfolge des Eintreffens der einzelnen Datenpakete berücksichtigt ist, so daß ein Verlust von Datenpaketen oder ein Überholen von zu derselben virtuellen Verbindung gehörenden, aufeinanderfolgenden Dantenpaketen vermieden wird.

Die zentrale Steuereinrichtung ZST verwaltet darüber hinaus auch die Auslastung der einzelnen Pufferspeicher PS1 bis PSn, in dem sie beispielsweise bei Erreichen eines vorgegebenen Füllungsgrades eines der Pufferspeicher, beispielsweise des Pufferspeichers PS1, über die dem jeweiligen Pufferspeicher zugeordnete Pufferspeicher-Steuereinrichtung, hier also beispielsweise die Pufferspeicher-Steuereinrichtung PSS1, die Abgabe eines Steuersignals über die zugehörige Steuerleitung (SE1) veranlaßt. Durch ein solches Steuersignal wird in der mit der jeweiligen Eingangsleitung (z.B. E1) verbundenen Einrichtung, die, wie bereits oben erwähnt, beispielsweise eine Endeinrichtung oder der Ausgang eines vorgeschalteten Koppelelementes des Vermittlungsknotens sein kann, die Abgabe eines weiteren Datenpaketes vorübergehend unterbunden. Eine erneute Aufnahmebereitschaft des jeweiligen Pufferspeichers kann beispielsweise durch Wegnahme des gerade genannten Steuersignals angezeigt werden.

Die zentrale Steuereinrichtung ZST erhält darüber hinaus auf den bereits erwähnten Steuerleitungen SA1 bis SAn auftretende Steuersignale über das Busleitungssystem BUS2 zugeführt, falls über eine oder mehrere der Ausgangsleitungen A1 bis An eine Übertragung eines Datenpakets aufgrund einer Überlastung der mit der jeweiligen Ausgangsleitung verbundenen Einrichtung nicht möglich ist. Wie bereits oben erwähnt, kann es sich bei einer derartigen Einrichtung entweder um eine Endeinrichtung oder um ein nachgeschaltetes Koppelelement des Vermittlungsknotens handeln.

Vorstehend wurde davon ausgegangen, daß jeden der Pufferspeicher PS1 bis PSn m ≦ k Ausgänge aufweist. Wird die Anzahl der Ausgänge pro Pufferspeicher beispielsweise mit m = 2 gewählt, so kann die Durchschaltekapazität von Datenpaketen des beschriebenen Koppelelementes gegenüber einem Koppelelement mit lediglich jeweils einen Ausgang aufweisenden Pufferspeichern zwischen 60 % bis 90 % erhöht werden. Diese Durchschaltekapazität kann jedoch durch eine Erhöhung der Anzahl der Ausgänge pro Pufferspeicher noch erhöht werden.

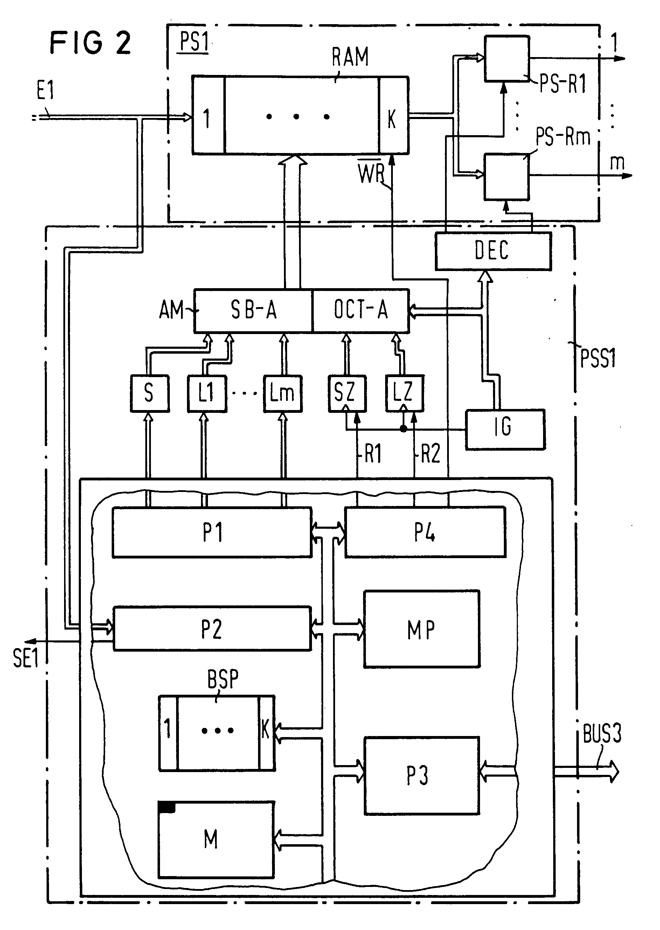

In Figur 2 ist am Beispiel des Pufferspeichers PS1 und der Pufferspeicher-Steuereinrichtung PSS1 ein möglicher Aufbau der in Figur 1 dargestellten Pufferspeicher und der damit verbundenen Pufferspeicher-Steuerungen angegeben. Dabei wird davon ausgegangen, daß, wie bereits oben erwähnt, die einzelnen Datenpakete von einer dem Pufferspeicher vorgeschalteten Einrichtung derart aufbereitet sind, daß diesen jeweils Adressensignale beigefügt sind, durch welche eine der Ausgangsleitungen des Koppelelemtes bezeichnet ist. Die mit dem Pufferspeicher PS1 verbundene, in FIG 1 lediglich schematisch dargestellte Eingangsleitung E1 möge dabei als Bündelleitung mit einer Mehrzahl von Einzelleitungen ausgebildet sein, von denen ein Teil für eine oktettweise serielle Übertragung von Datenpaketen und ein weiterer Teil für die Übertragung der genannten Adressensignale benutzt ist.

Der Pufferspeicher PS1 weist einen Schreib/Lese-Speicher RAM auf, der eingangsseitig mit den die Oktetts von Datenpaketen führenden Einzelleitungen der Bündelleitung E1 verbunden ist. Dieser Schreib/Lese-Speicher enthält insgesamt k Speicherbereiche 1 bis k, in welchen jeweils ein Datenpaket oktettweise in aufeinanderfolgenden Speicherzellen speicherbar ist. Ausgangsseitig sind an den Schreib-Lese-Speicher m Parallel-Serien-Register PS-R1 bis PS-Rm angeschlossen. Diese Register, die die in Fig. 1 angegebenen Ausgänge 1 bis m des Pufferspeichers PS1 bilden, sind individuell über jeweils einen Steuereingang für die Aufnahme eines bei einem Lesevorgang am Ausgang des Schreib/Lese-Speichers RAM auftretenden Oktetts ansteuerbar. Wie im folgenden noch erläutert wird, kann im Zuge eines Steuerzyklus in jedes der m Parallel-Serien-Register ein Oktett aufgenommen werden. Diese Oktetts werden anschließend gleichzeitig seriell an den Raumkoppler RK weitergeleitet.

Für die Steuerung des genannten Schreib/Lese-Speichers RAM ist mit dessen Adresseneingängen ein Adressenmultiplexer AM der Pufferspeicher-Steuereinrichtung PSS1 verbunden. Dieser Adressen-Multiplexer ist in zwei Bereiche SB-A und OCT-A unterteilt. An den Bereich SB-A sind ein Register S für die Speicherung einer bei Schreibvorgängen zu benutzenden Speicherbereichsadresse sowie m Register L1 bis Lm für die Speicherung jeweils einer bei Lesevorgängen zu benutzenden Speicherbereichsadresse angeschlossen. Die Register L1 bis Lm sind dabei den mit 1 bis m bezeichneten Ausgängen des Pufferspeichers PS1 zugeordnet. An den Bereich OCT-A sind dagegen ein Oktettzähler SZ für Schreibvorgänge und ein Oktettzähler LZ für Lesevorgänge angeschlossen. Diese Oktettzähler weisen jeweils eine der Anzahl der in einem Datenpaket maximal enthaltenen Oktetts entsprechende Zählperiode auf und werden dafür von eine89105398 89105398 m Impulsgeber IG her angesteuert. Dieser Impulsgeber führt darüber hinaus auch dem Adressenmultiplexer AM und einem Decodierer DEC im Zuge eines Steuerzyklus Einstellsignale (Einstellimpulse) zu. Letzterer weist m Ausgänge auf, die an die oben erwähnten Steuereingänge der Parallel-Serien-Register PS-R1 bis PS-Rm angeschlossen sind.

Der Puffersteuer-Einrichtung PSS1 ist außerdem ein Prozessor PR zugehörig, der beispielsweise aus einer Mikroprozessor-Anordnung gebildet ist. Diese Mikroprozessor-Anordnung weist einen Mikroprozessor MP auf, an dessen Bussystem eine aus den Speichern BSP und M bestehende Speicheranordnung sowie vier Schnittstelleineinrichtungen P1 bis P4 angeschlossen sind. Der Speicher M dient dabei in bekannter Weise als Arbeits- und Programmspeicher, während in dem Speicher BSP zugehörigen Speicherzellen 1 bis k die aktuellen Belegungszustände der Speicherbereiche 1 bis k des Schreib-Lese-Speichers RAM gespeichert sind.

An die Schnittstelleneinrichtung P1 sind die zuvor genannten Register S und L1 bis Lm eingangsseitig angeschlossen, während die Schnittstelleneinrichtung P2 einerseits mit der Bündelleitung E1 sowie mit der in FIG 1 angegebenen Leitung SE1 in Verbindung steht. Über die Schnittstelleneinrichtung P3 ist die Puffersteuer-Steuereinrichtung PSS1 an das in FIG 1 dargestellte Busleitungssystem BUS3 angekoppelt. Schließlich sind an die Schnittstelleneinrichtung P4 eine mit W̅R̅ bezeichnete Leitung sowie Rücksetzleitungen R1 und R2 für die Oktettzähler angeschlossen. Über die Leitung W̅R̅ werden Schreibimpulse zu dem Schreib/Lese-Speicher RAM hin übertragen.

In dem zuvor genannten Speicher BSP ist die aktuelle Belegung der Speicherbereiche des Schreib/Lese-Speichers RAM gespeichert. Anhand dieser Belegung ermittelt der Mikroprozessor MP einen nicht belegten Speicherbereich, in welchem ein im folgenden auf der Bündelleitung E1 auftretendes Datenpaket abzuspeichern ist. Die Anfangsadresse dieses Speicherbereiches wird anschließend in das Register S übertragen.

Bei Auftreten eines Datenpaketes auf der Bündelleitung E1, welches von dem Mikroprozessor anhand des Paketkopfes erkannt wird, überträgt der bereits erwähnte Impulsgeber IG über eine Leitungsanordnung S ein Einstellsignal zu dem Adressenmultiplexer AM hin. Durch dieses Einstellsignal wird der Adressenmultiplexer derart gesteuert, daß er die in dem Register S gespeicherte, zuvor genannte Anfangsadresse sowie einen Anfangszählerstand des Oktettzählers SZ als Adressensignale dem Schreib/Lese-Speicher RAM zuführt. Dieser Anfangszählerstand wird durch ein Rücksetzsignal auf der Rücksetzleitung R1 eingestellt. Außerdem überträgt der Mikroprozessor MP über die Leitung W̅R̅ Schreibimpulse an den Schreib/Lese-Speicher. Aufgrund des Auftretens dieser Schreibimpulse und einer damit verbundenen Inkrementierung des aktuellen Zählerstandes des Oktettzählers SZ werden die einzelnen Oktetts des gerade auftretenden Datenpaketes fortlaufend in Speicherzellen des Schreib-Lese-Speichers abgespeichert. Nach der vollständigen Speicherung des Datenpaketes wird der in dem Prozessor PR vorhandene Speicher BSP aktualisiert und als Vorbereitung für den erneuten Empfang eines Datenpaketes eine Anfangsadresse eines freien Speicherbereiches des Schreib/Lese-Speichers RAM in das Register S übertragen. Außerdem werden, wie bereits oben erwähnt, mit der Speicherung des betreffenden Datenpaketes die diesem auf der Bündelleitung E1 beigefügten Adressensignale zusammen mit der Anfangsadresse des gerade benutzten Speicherbereiches des Schreib/Lese-Speichers RAM über das Busleitungssystem BUS3 zu der zentralen Steuereinrichtung ZST hin übertragen.

Darüber hinaus überträgt die zentrale Steuereinrichtung ZST über das Busleitungssystem BUS3, wie bereits oben erwähnt, in festgelegten Zeitintervallen nacheinander n Steuerinformationen zu ausgewählten Pufferspeicher-Steuereinrichtungen hin, um die jeweils zugehörigen Pufferspeicher in eine Übertragung von Datenpaketen über den Raumkoppler RK einzubeziehen. In diesen Steuerinformationen sind jeweils die Anfangsadresse desjenigen Speicherbereiches des Schreib/Lese-Speichers RAM, in welchem der zu übertragende Datenblock gespeichert ist, sowie Angaben bezüglich des für die Übertragung zu benutzenden Ausganges des jeweiligen Pufferspeichers enthalten. Dabei kann beispielsweise die in FIG 2 dargestellte Pufferspeicher-Steuereinrichtung PSS1 entsprechend der Anzahl der bei dem zugehörigen Pufferspeicher PS1 vorhandenen Ausgänge bis zu m Steuerinformationen zugeführt erhalten. Auf die Aufnahme dieser Steuerinformationen hin werden anhand der Ausgangsangaben die genannten Anfangsadressen in die Register L1 bis Lm übertragen.

Anschließend wird von der Pufferspeicher-Steuereinrichtung PSS1 ein Steuerzyklus durchgeführt, der sich über die Dauer des gerade begonnen Zeitintervalls erstreckt und in eine der Anzahl der maximal in einem Datenpaket enthaltenen Oktetts entsprechende Anzahl von Unterzyklen unterteilt ist. In jedem dieser Unterzyklen werden nacheinander Einstellsignale über die Leitungsanordnung S zu dem Adressenmultiplexer AM und dem Decodierer DEC hin übertragen. Durch diese Einstellsignale werden dem Schreib/ Lese-Speicher RAM zum Auslesen von Oktetts im Zeitmultiplelxbetrieb die in den Registern L1 bis Lm gespeicherten Anfangsadressen sowie der aktuelle Zählerstand des Oktettzählers LS als Adressensignale bereitgestellt. Der Oktettzähler nimmt dabei bei Beginn des Steuerzyklus durch ein Rücksetzsignal auf der Rücksetzleitung R2 seinen Anfangszählerstand ein. Am Ende eines jeden Unterzyklus wird dann, ausgehend von dem Anfangszählerstand, der aktuelle Zählerstand inkrementiert.

In jedem der gerade erläuterten Unterzyklen werden damit m Oktetts von m verschiedenen Datenblöcken ausgelesen und den Parallel-Serien-Registern PS-R1 bis PS-Rm zugeführt. Diese Register werden dabei über den Decodierer DEC nacheinander für die Aufnahme eines Oktetts aktiviert. Nach der Aufnahme dieser Oktetts erfolgt dann eine gleichzeitige serielle Übertragung zu dem Raumkoppler RK hin.

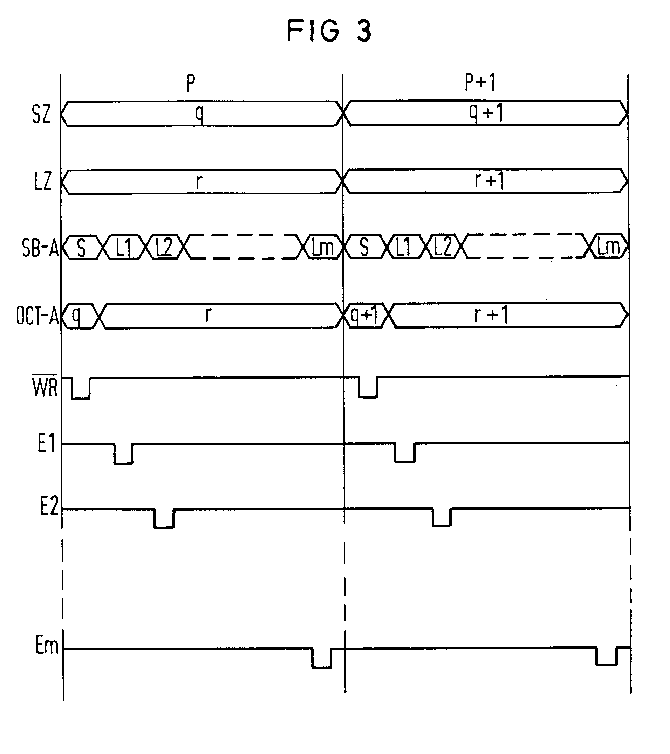

Der zuvor erläuterte Steuerzyklus ist um übrigen so festgelegt, daß in jedem Unterzyklus zusätzlich ein Oktett eines auf der Bündelleitung E1 auftretenden Datenpaketes in dem Schreib-Lese-Speicher RAM eingeschrieben werden kann. Dies geht auch aus dem in FIG 3 dargestellten Zeitdiagramm hervor. In diesem sind für zwei aufeinanderfolgende Unterzyklen p und p+1 der jeweils aktuelle Zählerstand q bzw. q+1 des Oktettzählers SZ, der jeweils aktuelle Zählerstand r bzw. r+1 des Oktettzählers LZ, die an den Ausgängen der Bereiche SB-A und OCT-A des Adressenmultiplexers AM auftretenden Adressensignale, die zeitliche Lage eines Schreibimpulses W̅R̅ sowie auf der Leitungsanordnung S auftretende Einstellsignale E1 bis Em angegeben.

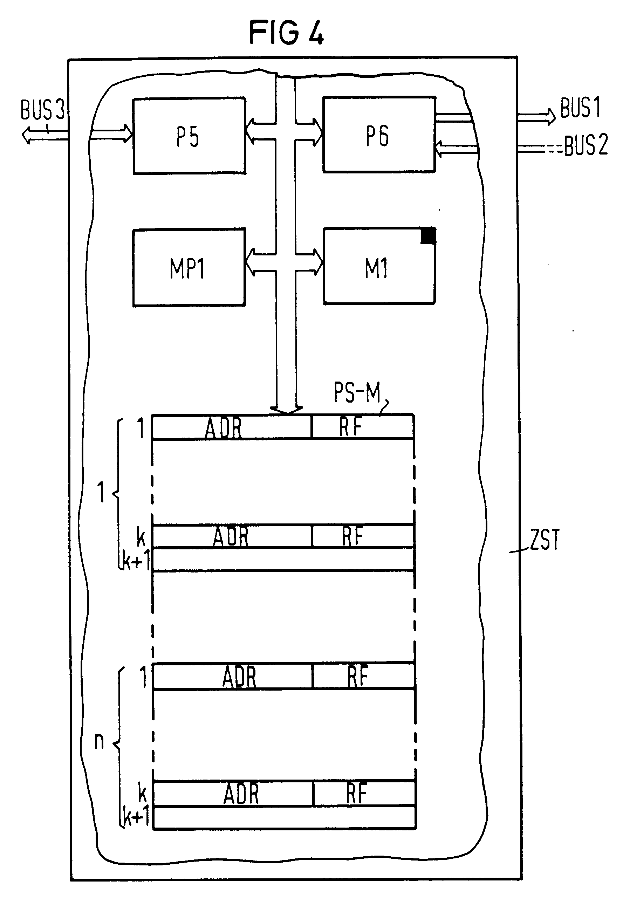

In FIG. 4 ist ein möglicher Aufbau der in FIG. 1 dargestellten zentralen Steuereinrichtung ZST ausschnittweise dargestellt. Danach weist die zentrale Steuereinrichtung einen Mikroprozessor MP1 auf, an dessen Bussystem zwei Schnittstelleneinrichtungen P5 und P 6 sowie eine aus einem Speicher M1 und einem Schreib/Lese-Speicher PS-M bestehende Speicheranordnung angeschlossen sind. Die Schnittstelleneinrichtung P5 ist dabei für einen Datenaustausch mit den Pufferspeicher-Steuereinrichtungen PSS1 bis PSSn über das Busleitungssystem BUS3 vorgesehen. Über die Schnittstelleneinrichtung P6 steht dagegen die zentrale Steuereinrichtung ZST mit den Busleitungssystemen BUS1 und BUS2 in Verbindung.

Der Speicher M1 dient in bekannter Weise als Arbeits- und Programmspeicher, während mit Hilfe des Speichers PS-M die oben erwähnte Steuerung der Übertragung von in den einzelnen Pufferspeichern anstehenden Datenpaketen erfolgt. Der Speicher PS-M weist dafür den n Pufferspeichern PS1 und PSn zugeordnete Speicherbereiche 1 bis n auf. Jeder dieser Speicherbereiche ist entsprechend den in den Pufferspeichern jeweils speicherbaren Datenpaketen in k + 1 Speicherzellen unterteilt. Die ersten k Speicherzellen dienen dabei für die Speicherung der von der jeweiligen Pufferspeicher-Steuereinrichtung übertragenen, den Datenpaketen zugeordneten Adressensignale. Für diese Speicherung, die beispielsweise nach Maßgabe einer in dem Speicher M1 vorhandenen Liste für freie Speicherzellen vorgenommen werden kann, ist in jeder der k Speicherzellen ein mit ADR bezeichneter Zellenteil vorgesehen. In einem weiteren Zellenteil RF ist die Reihenfolge des Eintreffens der einzelnen Adressensignale und damit die Reihenfolge der in dem jeweiligen Pufferspeicher übernommenen Datenpakete markiert. Diese Reihenfolge wird mit jedem Einschreiben und Auslesen von Adressensignalen aktualisiert, beispielsweise nach einem bekannten Kettungsprinzip.

In der letzten der k+1 Speicherzellen eines Speicherbereiches ist der momentane Belegungszustand des jeweiligen Speicherbereiches und damit der Belegungszustand des jeweiligen Pufferspeichers gespeichert.

Anhand der in dem gerade beschriebenen Speicher PS-M hinterlegten Informationen wählt der der zentralen Steuereinrichtung ZST zugehörige Mikroprozessor in aufeinanderfolgenden Zeitintervallen jeweils n Datenpakete für eine Weiterleitung an die n Ausgänge des Raumkopplers RK aus. Dabei können in Abhängigkeit von der Auslastung der einzelnen Ausgänge des Raumkopplers bis zu m, in dem selben Pufferspeicher gespeicherte Datenpakete berücksichtigt sein. Nach einer solchen Auswahl erfolgt dann in der oben angegebenen Weise eine Einstellung des Raumkopplers RK und eine Übertragung von Steuerinformationen zu den in Frage kommenden Pufferspeicher-Steuereinrichtungen hin.

## Patentansprüche

1. Vermittlungsknoten für die Vermittlung von in Datenpaketen übertragenen Datensignalen mit wenigstens einem Koppelelement, welches eine Anzahl n von Eingangsleitungen (E1, ..., En) und eine Anzahl n von mit den Eingangsleitungen über einen Raumkoppler (RK) wahlfrei verbindbaren Ausgangsleitungen (A1. ..., An) aufweist, wobei den Eingangsleitungen jeweils ein Pufferspeicher (PS1, ..., PSn) zugeordnet ist, in welchem k auf der jeweiligen Eingangsleitung aufeinanderfolgend auftretende Datenpakete vor ihrer Weiterleitung an die jeweils durch in dem jeweiligen Datenpaket enthaltene Adressensignale bezeichnete Ausgangsleitung speicherbar sind,
**dadurch gekennzeichnet,**
daß die Pufferspeicher (PS1, ..., PSn) jeweils eine Mehrzahl m ≦ k Ausgänge (1, ..., m) aufweisen, über welche gleichzeitig m in dem jeweiligen Pufferspeicher gespeicherte an m unterschiedliche Ausgangsleitungen weiterzuleitende Datenpakete einem mxn Eingänge und n Ausgänge aufweisenden Raumkoppler (RK) zuführbar sind.

2. Vermittlungsknoten nach Anspruch 1,
**dadurch gekennzeichnet,**
daß die Pufferspeicher (PS1, ..., PSn) jeweils zumindest zwei Ausgänge aufweisen.

3. Vermittlungsknoten nach Anspruch 1 oder 2,
**dadurch gekennzieichnet,**
daß jedem der Pufferspeicher (PS1, ..., PSn) jeweils eine Steuereinrichtung (PSS1, ..., PSSn) zugeordnet ist, welche einerseits die Aufnahme von Datenpaketen in freie Speicherbereiche des zugehörigen Pufferspeichers und andererseits die Abgabe von Datenpaketen an den Raumkoppler (RK) nach Maßgabe der für eine Vermittlung gerade bereitstehenden Ausgangsleitungen des Koppelelementes steuert.

4. Vermittlungsknoten nach Anspruch 3,
**dadurch gekennzeichnet,**
daß die jeweilige Steuereinrichtung bei der Aufnahme eines Datenpaketes in einen Speicherbereich des zugehörigen Pufferspeichers Angaben bezüglich dieses Speicherbereiches und dem jeweiligen Datenpaket beigefügte, eine der Ausgangsleitungen des Koppelelementes bezeichnende Adressensignale einer zentralen Steuereinrichtung (ZST) züführt
und daß die zentrale Steuereinrichtung nach Maßgabe der ihr von den einzelnen Steuereinrichtungen zugeführten Informationen in vorgegebenen Zeitintervallen einerseits n Datenpakete für eine Vermittlung auswählt und den Raumkoppler (RK) entsprechend einstellt und andererseits den Steuereinrichtungen jeweils Angaben bezüglich derjenigen Speicherbereiche des zugehörigen Pufferspeichers, in welchen die gerade zu übertragenden Datenpakete gespeichert sind, sowie Angaben bezüglich der für die Übertragung der Datenpakete zu benutzenden Ausgänge des zugehörigen Pufferspeichers zuführt.

## Claims

1. Switching node for switching data signals transmitted in data packets, having at least one coupling element which has a number n of input lines (E1, ..., En) and a number n of output lines (A1, ..., An) which can be connected electively to the input lines via a space switch (RK), there being associated with the input lines in each case a buffer store (PS1, ..., PSn) in which it is possible to store k data packets occurring in succession on the respective input line before they are routed further to the output line indicated by the address signals contained in the respective data packet in each case, characterised in that the buffer stores (PS1, ..., PSn) contain in each case a plurality m ≦ k outputs (1, ..., m), via which it is possible to supply simultaneously m data packets stored in the respective buffer store to be routed further to m different output lines to a space switch (RK) having mxn inputs and n outputs.

2. Switching node according to Claim 1, characterised in that the buffer stores (PS1, ..., PSn) have at least two outputs in each case.

3. Switching node according to Claim 1 or 2, characterised in that there is associated with each of the buffer stores (PS1, ..., PSn) in each case a control device (PSS1, ..., PSSn) which controls on the one hand the storage of data packets in free storage areas of the associated buffer store and on the other hand the output of data packets to the space switch (RK) according to the output lines of the coupling element currently available for switching.

4. Switching node according to Claim 3, characterised in that, during the storage of a data packet in a storage area of the associated buffer store, the respective control device supplies information relating to said storage area and address signals appended to the respective data packet and identifying one of the output lines of the coupling element to a central control device (ZST), and in that, depending on the information it is supplied from the individual control devices, at predetermined time intervals the central control device on the one hand selects n data packets for switching and sets the space switch (RK) accordingly, and on the other hand supplies the control devices in each case with information relating to the particular storage areas of the associated buffer store in which the data packets to be transmitted now are stored, as well as information relating to the outputs of the associated buffer store to be used for transmitting the data packets.

## Revendications

1. Noeud de commutation pour la commutation de signaux de données transmis en paquets de données, comportant au moins un élément de couplage, qui possède un nombre n de lignes d'entrée (E1, ..., En) et un nombre n de lignes de sortie (A1, ..., An) pouvant être reliés au choix aux lignes d'entrée par l'intermédiaire d'un coupleur spatial (RK), et dans lequel aux lignes d'entrée sont associées respectivement une mémoire tampon (PS1, ..., PSn), dans lesquelles k paquets de données, qui apparaissent successivement dans la ligne d'entrée respective, peuvent être mémorisés, avant leur retransmission à la ligne de sortie désignée respectivement par des signaux d'adresses contenus dans le paquet de données,
caractérisé par le fait que les mémoires tampons (PS1, ..., PSn) possèdent respectivement une multiplicité de m ≦ k sorties (1, ..., m), par lesquelles simultanément m paquets de données mémorisés dans la mémoire tampon et devant être retransmis à m lignes de sortie différentes, peuvent être envoyés à un coupleur spatial (RK) qui possède m x n entrées et n sorties.

2. Noeud de commutation suivant la revendication 1, caractérisé par le fait que les mémoires tampons (PS1, ..., PSn) comportent chacune au moins deux sorties.

3. Noeud de commutation suivant la revendication 1 ou 2, caractérisé par le fait
qu'à chacune des mémoires tampons (PS1, ..., PSn) est associé respectivement un dispositif de commande (PSS1, ... PSSn), qui commande d'une part la réception de paquets de données dans des zones libres de la mémoire tampon associée et d'autre part la délivrance de paquets de données au coupleur spatial (RK) en fonction des lignes de sortie de l'élément de couplage, qui sont précisément disponibles pour une commutation.

4. Noeud de commutation suivant la revendication 3, caractérisé par le fait
que lors de la réception d'un paquet de données dans une zone de la mémoire tampon associée, le dispositif respectif de commande envoie a un dispositif central de commande (ZST), des indications concernant cette zone de mémoire et des signaux d'adresses qui sont adjoints au paquet de données respectif et qui désignent l'une des lignes de sortie de l'élément de couplage, et
qu'en fonction des informations qui lui sont envoyées par les différents dispositifs de commande, le dispositif central de commande d'une part sélectionne n paquets de données pour une commutation, pendant des intervalles de temps prédéterminés, et règle de façon correspondante le coupleur spatial (RK), et d'autre part envoie aux dispositifs de commande respectivement des indications concernant les zones de la mémoire tampon associée, dans lesquelles sont mémorisés les paquets de données devant être précisément transmis, ainsi que des indications concernant les sorties de la mémoire tampon associée, qui doivent être utilisées pour la transmission des paquets de données.
